# EUROPEAN PATENT SPECIFICATION

(11) **EP 0 625 030 B1**
(45) Date of publication and mention of the grant of the patent: **06.11.1996**
(21) Application number: 92904587.0
(22) Date of filing: 15.01.1992
(51) Int. Cl.: A61C 8/00

(54) **DENTAL IMPLANT**
ZAHNIMPLANTAT
IMPLANT DENTAIRE

(43) Date of publication of application: 23.11.1994
(73) Proprietor: ASAMI TANAKA DENTAL ENTERPRISES, INC., Skokie, Illinois 60077 (US)
(72) Inventor: TANAKA, Asami, Skokie, IL 60077 (US)
(74) Representative: Chettle, Adrian John
(86) International application number: US9200270
(87) International publication number: WO9313728

(56) References cited:
- EP-A- 0 256 708
- EP-A- 0 313 222
- GB-A- 2 176 709
- US-A- 4 457 714
- US-A- 4 547 157

## Description

### Technical Field

This invention relates to oral prosthetic implants and more particularly a dental implant installed by a method involving the reduction in size of an over-sized implant head.

An implant head as defined in the preamble of Claim 1 is disclosed in GB-A-2 176 709.

### Background Art

A variety of dental implants have been developed to provide replacements for natural teeth or as abutments for bridgework. Typically these implants are of two-piece construction.

One method of installing an implant involves first inserting a root portion into the bone in a subgingival manner. The implant is then left in position for a period long enough to allow bone tissue to form around the implant and anchor it in position. Because the root is inserted subgingivally, the forming bone is protected from any weakening or damage that might have occurred if the implant had protruded into the mouth where it could be knocked and the root jarred. Once the root is securely anchored, a removable implant head is attached that provides a support onto which a tooth-shaped overlay can be secured.

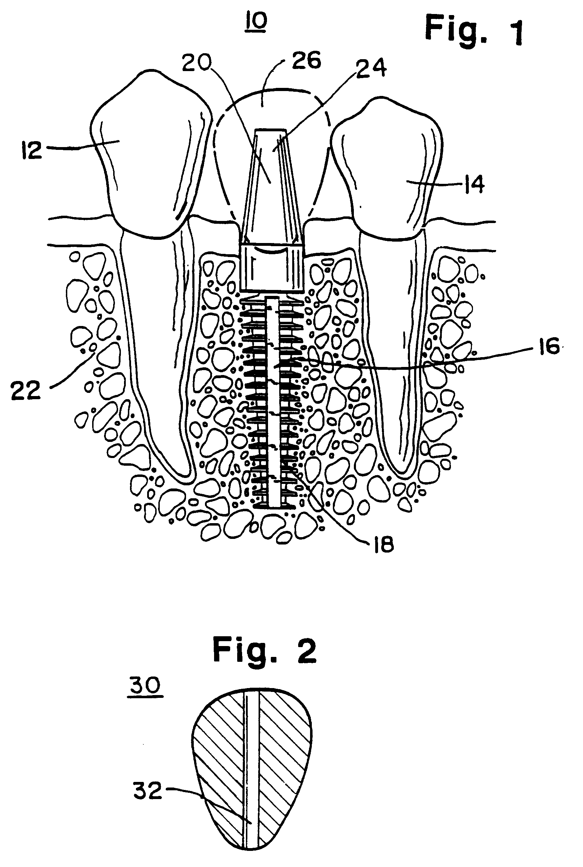

One difficulty encountered with prior art implants is the fragile nature of the resulting artificial tooth. Such a prior art device is seen in FIG. 1. The dental implant 10 is located between two natural teeth 12 and 14. The implant 10 is formed using a typical submergible post-type dental implant system. The implant 10 includes a root 16 that may be of one, or two, piece construction having an anchor 18 and an implant head 20. The root is secured to the jaw bone 22 and the implant head 20 is generally either protected against jarring by use of a healing cap during bone growth or secured to the anchor at a later stage after bone growth is completed and the root is firmly anchored. The implant head 20 of prior art systems generally has a top tapered portion 24 to which a dental restoration 26 is attached.

The implant head 20 of Figure 1 is illustrative of the implant heads used in prior art systems. See e.g., U.S. Patent Nos. 4,547,157; 4,645,453; 4,687,443; 4,713,003; 4,744,753; 4744,754; 4,744,755; and 4,744,756. The head is small in volume relative to the volume of the tooth shaped dental restoration 26. The restoration is conventionally formed from porcelain or a similar material and is therefore inherently fragile. The larger the volume of the restoration, the greater the tendency for the tooth to crack and deteriorate.

There are prior art dental prostheses that are formed from metal bodies with a ceramic overlay baked on the body. It is generally accepted that the best metallic material to use for such restorations is titanium. Titanium is recognized as the most bio-compatible metal for such uses. The methods of forming such prostheses however involve casting the metal to provide a body of appropriate shape. One such method is disclosed in U.S. Patent 4,744,756 in which a metal body is attached to an implant head to provide a larger support for a porcelain-type overlay. Casting is required in order that the body fits the root element and is suitably shaped to support an overlay.

However, the casting apparatus required for the formation of such pieces for titanium is generally not available in a dental surgery. Consequently the metal bodies must be cast off premises. This has two consequences. First, it can cause unnecessary delay and increased the expense of the procedure. Second, metals cast using these techniques tend to be brittle and weaker than machine metals and thus have a high risk of damage during use, implementation and transportation before implantation.

The use of gold or palladium is possible to overcome some of these problems, however, because of the cost of such metals, the use of oversized gold or palladium bodies is not commercially feasible.

It is desirable therefore to provide an improved oral prosthetic implant.

### Disclosure of Invention

This invention provides an improved dental prosthesis. This invention provides a dental prosthesis for which all the necessary steps for installation can be carried out by a dental surgeon using equipment available for use in the everyday course of trade.

Other objects, advantages and features of the invention will become apparent upon reading the following detailed description and appended claims, and upon reference to the accompanying drawings.

According to the invention there is provided a prefabricated grindable implant head adapted to be secured to a preinserted dental implant root member together forming a dental implant characterised in that the implant head is oversized and tooth-shaped.

One method of installing a dental implant according to this invention includes the insertion of a root member into the bone and the reduction in size of an oversized implant head prior to securement to the root member. The root member is inserted into a pre-drilled socket in the support bone. The root is left in place and the bone is allowed to grow back and secure it in position. The oversized implant head is a prefabricated machined titanium head adapted for connection to the root member. The implant head is reduced in size until it is suitably shaped to receive an overlay. The implant head is then secured to the root element.

The implant head is tooth-shaped. The implant head is preferably made of titanium because titanium does not present problems of rejection by the body.

The titanium must be sufficiently workable to allow grinding of the implant head to the appropriate size.

### Brief description of the drawings

For a more complete understanding of this invention, reference should now be made to the embodiment illustrated in greater detail in Figures 1-4 of the accompanying drawings and described by way of example only. In the drawings:
Fig.1 is a schematic sectional view through a prior art tooth implant;
Fig. 2 is a schematic sectional view through an implant head according to the invention;
Fig. 3 is a schematic sectional view through a dental implant, according to the invention secured to a root member; and
Fig. 4 is a schematic view of a completed dental implant of this invention.

The method of installing a dental implant of the present invention can be carried out in its entirety in a dental surgery. It is envisioned that the dental surgeon will have a collection of implant heads 30 similar to the one shown in Figure 2. Each implant head 30 has a central shaft 32 adapted for receiving a screw head for attachment to a root portion previously anchored to the jaw bone. The implant heads 30 will be substantially tooth shaped and in a variety of sizes to enable them to be reduced to a size and shape suitable for receiving an overlay with minimum grinding by the dental surgeon. Due to the wide variety of tooth shapes in the variety of people, some grinding will be inevitable but with prudent choice of gradation in tooth size, the grinding necessary will be kept to a minimum.

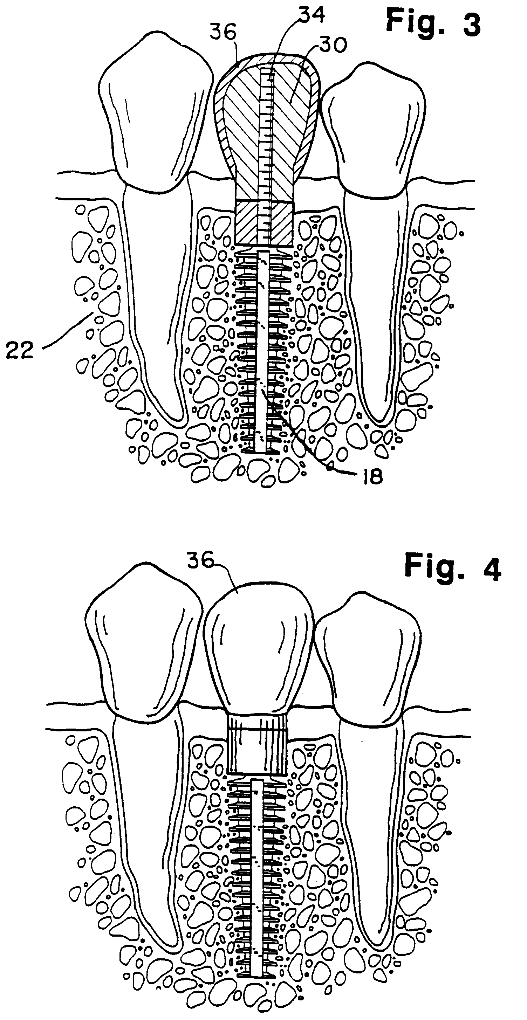

Turning now to Figures 3 and 4, the completed restoration can be seen. A properly chosen implant head 30 has been reduced in size and attached to a root anchor 18. The anchor 18 is one of the known varieties of anchors and is implanted in the jaw bone 22 using one of the known appropriate methods. A screw 34 is employed to attach the implant head 30 to the root anchor 18 and a relatively thin overlay 36 provides the outer surface of the tooth. The overlay 36 forms only a small part of the total volume of the prosthetic tooth. This reduces brittleness and therefore increases the durability of the tooth.

The prosthetic tooth shown in Figures 3 and 4 is installed in stages. First, the patient visits the dental surgeon's surgery to have the root 18 implanted in the jaw bone 22. At this or the subsequent visit, when the implant head is attached, the dental surgeon decides upon the size of the prefabricated implant head 30 to be worked with. This size obviously depends upon the size and shape of the patient's teeth. The implant head 30 is preferably titanium alloy as the human body does not have a rejection reaction to titanium. Being a relatively soft metal it is also ideally suited to grinding.

On a second visit once the root 18 is firmly anchored in position, the dental surgeon proceeds to grind the prefabricated implant head 30 until it is the required size. Using the surrounding teeth as a guide, the dental surgeon grinds the implant head 30 until it fits into the gap provided for the implant tooth yet still providing sufficient room for an overlay 36 to be attached.

The prefabricated implant head used in this invention can be shaped to the most desirable configuration to accommodate the overlay 36. With conventional techniques, however, the implant head must be relatively small and it is often difficult to apply a crown to the resultant stump. Using the method of this invention the dental surgeon may reduce an oversized implant head 30 to provide an ideally shaped implant head to take an overlay or crown. Once the implant head has been ground to size, it is attached to the anchored root 18. This is achieved by a pin 34 screwed through both the implant head 30 and the root 18 has shown in Figure 3. Alternatively, the implant head 30 could have an integral screw thread for receipt by the root member. This method may, however, cause problems with orientation of ground implant head 30 which is likely to be highly asymmetrical.

When the implant head is in position conventional crowning techniques can be used to attach tooth-shaped overlay 36 to the implant head.

Each of the steps set forth above can be carried out in a dental surgery by a dental surgeon. This reduces the time and expense of sending implants off-premise to be cast. In addition, breakage of the implant head is virtually eliminated as the implant head being larger is far less brittle further reducing inconvenience to both the dental surgeon and the patient. The increased size of the implant head of this invention also reduces the thickness of a ceramic overlay required to provide a tooth surface. Thinner ceramics are less prone to cracking and the prosthetic tooth is therefore more durable. Preferably the overlay is formed of procelain.

As can be seen from above, the method of installation is very versatile and can be used with any of the known root implanting, crowning and capping techniques. It is convenient for the dental surgeon as well as speeding the installation process and increasing durability of the implant for the patient. The technique can be used for the same variety of implants as conventional prosthetic implants, ranging from single tooth implants to bridges.

While one preferred embodiment of a tooth implant according to the invention is illustrated, it will be understood, of course that the invention is not limited to this embodiment. Those skilled in the art to which the invention pertains may make modifications, and other embodiments of the tooth-implant employing the principles of the invention are possible within the monopoly defined by the claims appended hereto.

## Claims

1. A prefabricated grindable implant head (30) adapted to be secured to a preinserted dental implant root member (18) together forming a dental implant characterised in that the implant head (30) is oversized and tooth-shaped.

2. An oral prosthesis comprising:
a root member (18) adapted for insertion in a support bone; and
an implant head (30) according to claim 1 for connection to said root member (18) wherein said implant head (30) is adapted for reduction in dimensions from dimensions greater than those desired to its desired size before connection to said root member (18).

3. The oral prosthesis of claim 2 wherein said implant head (30) is made from a titanium alloy.

4. The oral prosthesis of any one of claims 2-3 wherein said reduction in size is caused by grinding.

5. The oral prosthesis of any one of claims 2-4 further comprising an overlay (36) over said implant head.

6. The oral prosthesis of claim 5 wherein said overlay (36) is formed from porcelain.

7. The oral prosthesis of any one of claims 2-6 wherein said implant head (30) provides substantially the bulk of the oral prosthesis of which it is to form part.

8. The oral prosthesis of any one of claims 2-7 wherein the root member (18) and the implant head (30) are adapted for connection by a screw threaded pin (34) extending from the root member (18) and a bore extending through the implant head (30), the bore being adapted for engagement of the pin (34) therein.

## Patentansprüche

1. Vorfabrizierter schleifbarer Implantatkopf (30), der so angepaßt ist, daß er an einem vorher eingefügten Zahnimplantat-Wurzelelement (18) befestigbar ist, wobei der Implantatkopf und das Zahnimplantat-Wurzelelement zusammen ein Zahnimplantat bilden, **dadurch gekennzeichnet**, daß der Implantatkopf (30) übergroß und zahnförmig ist.

2. Mundprothese bestehend aus:
einem Wurzelelement (18), das in einen Trägerknochen einfügbar ist; und
einem Implantatkopf (30) nach Anspruch 1 zur Verbindung mit dem Wurzelelement (18), wobei der in seinen Abmessungen zu große Implantatkopf (30) auf die gewünschten Abmessungen verkleinerbar ist, bevor der Implantatkopf mit dem Wurzelelement (18) verbunden wird.

3. Mundprothese nach Anspruch 2, wobei der Implantatkopf (30) aus einer Titanlegierung hergestellt ist.

4. Mundprothese nach einem der Ansprüche 2 bis 3, wobei die Verkleinerung durch Schleifen erreicht wird.

5. Mundprothese nach einem der Ansprüche 2 bis 4, die zusätzlich einen Überzug (36) über den Implantatkopf aufweist.

6. Mundprothese nach Anspruch 5, wobei der Überzug (36) aus Porzellan geformt ist.

7. Mundprothese nach einem der Ansprüche 2 bis 6, wobei im wesentlichen der Implantatkopf (30) den Hauptanteil der zugehörigen Mundprothese darstellt.

8. Mundprothese nach einem der Ansprüche 2 bis 7, wobei das Wurzelelement (18) und der Implantatkopf (30) so angepaßt sind, daß sie durch einen an dem Wurzelelement (18) angeordneten Stift (34) mit Schraubgewinde und eine durch den Implantatkopf führende Bohrung, die den Stift (34) aufnehmen kann, verbindbar sind.

## Revendications

1. Tête (30) d'implant préfabriquée pouvant être meulée, susceptible d'être fixée à un élément de racine (18) d'implant dentaire préalablement introduit, de façon à former avec lui un implant dentaire, caractérisée un ce que la tête (30) d'implant est surdimensionnée et a la forme d'une dent.

2. Prothèse buccale comprenant :
un élément de racine (18) susceptible d'être introduit dans un os support ; et
une tête d'implant (30) conforme à la revendication 1, destinée à être reliée audit élément de racine (18), dans laquelle ladite tête (30) d'implant est susceptible d'être réduite en dimensions, à partir de dimensions supérieures à celles désirées jusqu'à la dimension souhaitée, avant d'être reliée audit élément (18) de racine.

3. Prothèse buccale selon la revendication 2, dans laquelle ladite tête d'implant (30) est fabriquée en un alliage de titane.

4. Prothèse buccale selon l'une quelconque des revendications 2-3 dans laquelle ladite réduction dimensionnelle est effectuée par meulage.

5. Prothèse buccale selon l'une quelconque des revendications 2-4, comprenant en outre un recouvrement (36) par dessus ladite tête d'implant.

6. Prothèse buccale selon la revendication 5, dans laquelle ledit recouvrement (36) est formé en porcelaine.

7. Prothèse buccale selon l'une quelconque des revendications 2-6, dans laquelle ladite tête d'implant (30) constitue sensiblement la masse de la prothèse buccale dont elle formera une partie.

8. Prothèse buccale selon l'une quelconque des revendications 2-7, dans laquelle ledit élément de racine (18) et ladite tête d'implant (30) sont formés de façon à être reliée par une goupille filetée formant vis (34) s'étendant depuis ledit élément de racine (18) et un alésage traversant la tête d'implant (30), l'alésage étant formé de façon à permettre à la goupille (34) de s'y prendre.
